(19) Europäisches Patentamt
European Patent Office
Office européen des brevets

(11) **EP 3 163 466 B1**

(12) **EUROPEAN PATENT SPECIFICATION**

(45) Date of publication and mention
of the grant of the patent:
**07.11.2018 Bulletin 2018/45**

(51) Int Cl.:
***G06F 17/30*** *(2006.01)*

(21) Application number: **14898690.4**

(22) Date of filing: **31.07.2014**

(86) International application number:
**PCT/CN2014/083485**

(87) International publication number:
**WO 2016/015312 (04.02.2016 Gazette 2016/05)**

(54) **TRAJECTORY DATA INQUIRY METHOD AND APPARATUS**

VERFAHREN UND VORRICHTUNG ZUR ABFRAGE VON TRAJEKTORIEDATEN

PROCÉDÉ ET APPAREIL D'INTERROGATION DE DONNÉES DE TRAJECTOIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.05.2017 Bulletin 2017/18**

(73) Proprietor: **Huawei Technologies Co. Ltd.
Shenzhen, Guangdong 518129 (CN)**

(72) Inventors:
• **LI, Yanhua
Shenzhen
Guangdong 518129 (CN)**
• **CHOW, Chi-Yin
Hong Kong (CN)**
• **YUAN, Mingxuan
Shenzhen
Guangdong 518129 (CN)**

• **YANG, Qiang
Shenzhen
Guangdong 518129 (CN)**

(74) Representative: **Gill Jennings & Every LLP
The Broadgate Tower
20 Primrose Street
London EC2A 2ES (GB)**

(56) References cited:
**WO-A1-2007/096002       CN-A- 102 915 346
CN-A- 103 106 280       US-A1- 2013 339 371
US-A1- 2013 339 371**

• **QIONG ZHANG: "Hierarchical Route
Representation, Indexing, and Search", IEEE
PERVASIVE COMPUTING, IEEE SERVICE
CENTER, LOS ALAMITOS, CA, US, vol. 7, no. 2, 1
April 2008 (2008-04-01), pages 78-84,
XP011207348, ISSN: 1536-1268**

**Description**

**TECHNICAL FIELD**

The present invention relates to the field of database technologies, and in particular, to a trajectory data query method and apparatus.

**BACKGROUND**

It is well known that a trajectory includes a series of geographical locations. However, with the development of science and technology, in addition to a characteristic of including geographical locations, the trajectory may further include a time label. That is, the trajectory may include a series of geographical locations with a time label. This may be theoretically understood as that "in three-dimensional space, one trajectory is constituted by multiple pieces of data that includes a time and a geographical location". In addition, the data of the trajectory may be stored in a spatial-temporal database for a user to query.

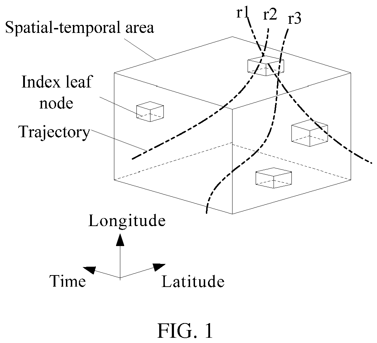

Currently, a trajectory data query from a user may be implemented by using a spatial-temporal index technology. First, a spatial-temporal index is established. As shown in FIG. 1, all trajectory data in a database is divided into small spatial-temporal areas, and each small spatial-temporal area (that is, a small cube shown in FIG. 1) is referred to as an index leaf node (index leaf node). Then, when trajectory data to be queried by the user is received, all leaf nodes in a related spatial-temporal area (that is, a big cube shown in FIG. 1) in the database are scanned and counted. By scanning, a statistical result of the trajectory data to be queried by the user can be obtained.

However, in the foregoing manner, a result required by the user can be obtained only by scanning a spatial-temporal area corresponding to the trajectory data to be queried by the user. When an amount of trajectory data to be queried by the user is huge, a spatial-temporal area corresponding to the trajectory data to be queried by the user is also huge, and it needs to take a very long time to scan the huge spatial-temporal area.

QIONG ZHANG, "Hierarchical Route Representation, Indexing, and Search", IEEE PERVASIVE COMPUTING, IEEE SERVICE CENTER, LOS ALAMITOS, CA, US, (20080401), vol. 7, no. 2, ISSN 1536-1268, pages 78 - 84 relates to generating routes for navigation. WO2007096002 relates to trajectory retrieval system, method and software for trajectory data retrieval. US2013339371 relates to spatio-temporal data management system, spatio-temporal data management method, and program thereof.

**SUMMARY**

Embodiments of the present invention provide a trajectory data query method and apparatus, which can greatly shorten a trajectory data query time.

In particular, the present invention provides a method according to claim 1 and an apparatus according to claim 9. Further technical features are set out in the respective dependent claims.

According to the trajectory data query method and apparatus that are provided in the present invention, a spatial-temporal index and an inverted index are established for trajectory data in a spatial-temporal database, where the inverted index is used to form a first relationship correspondence table that includes a correspondence between each trajectory and its associated index leaf node; a trajectory data query from a user is received, where the trajectory data query from the user includes: specifying, by the user, a space area in the spatial-temporal database; sampling is performed for an index leaf node included in the specified space area, where a quantity of index leaf nodes in the space area and a quantity of index leaf nodes obtained by sampling are determined; a correspondence between each trajectory included in the index leaf nodes obtained by sampling and an index leaf node associated with the trajectory is determined according to the index leaf nodes obtained by sampling and the first relationship correspondence table, to form a second relationship correspondence table; and a query result is determined according to the quantity of index leaf nodes in the space area, the quantity of index leaf nodes obtained by sampling, and data in the second relationship correspondence table. It can be seen from the above that, in addition to a spatial-temporal index, an inverted index is also established in the present invention. Therefore, according to the two indexes, a correspondence between a trajectory included in index leaf nodes obtained by sampling and an index leaf node associated with the trajectory can be determined, that is, a second relationship correspondence table is formed; and further, an unbiased estimation operator can be determined according to a quantity of index leaf nodes in a space area, a quantity of index leaf nodes obtained by sampling, and data in the second relationship correspondence table, and a query result can be determined by means of calculation. This manner in which a spatial-temporal index and an inverted index are established and that is based on sampling can avoid scanning all trajectory data in a query-related spatial-temporal area, thereby shortening a query time, improving query efficiency, and saving a system resource. In addition, a query result determined by means of calculation by using an unbiased estimation operator has relatively high accuracy.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is an exemplary schematic diagram of establishing a spatial-temporal index in the prior art;
FIG. 2 is a schematic flowchart of a trajectory data query method according to Embodiment 1 of the present invention;
FIG. 3 is a schematic flowchart of a trajectory data query method according to Embodiment 2 of the present invention;
FIG. 4 is a schematic structural diagram of a trajectory data query apparatus according to Embodiment 3 of the present invention;
FIG. 5 is another schematic structural diagram of a trajectory data query apparatus according to Embodiment 3 of the present invention;
FIG. 6 is a schematic structural diagram of a trajectory data query apparatus according to Embodiment 4 of the present invention; and
FIG. 7 is another schematic structural diagram of a trajectory data query apparatus according to Embodiment 4 of the present invention.

## DESCRIPTION OF EMBODIMENTS

The following clearly describes the technical solutions in the embodiments of the present invention with reference to the accompanying drawings in the embodiments of the present invention.

First, it should be noted that multiple space-time points exist in a spatial-temporal database. The space-time point has time and space information about time, longitude, and latitude, and the space-time point also has identification information. In this way, space-time points with same identification information may form a trajectory. In addition, an index leaf node also exists in the spatial-temporal database. The index leaf node is a human-specified minimum-unit space area. The index leaf node includes multiple space-time points within a time range. Because the space-time point has the time and space information about the time, the longitude, and the latitude, the index leaf node also has such time and space information.

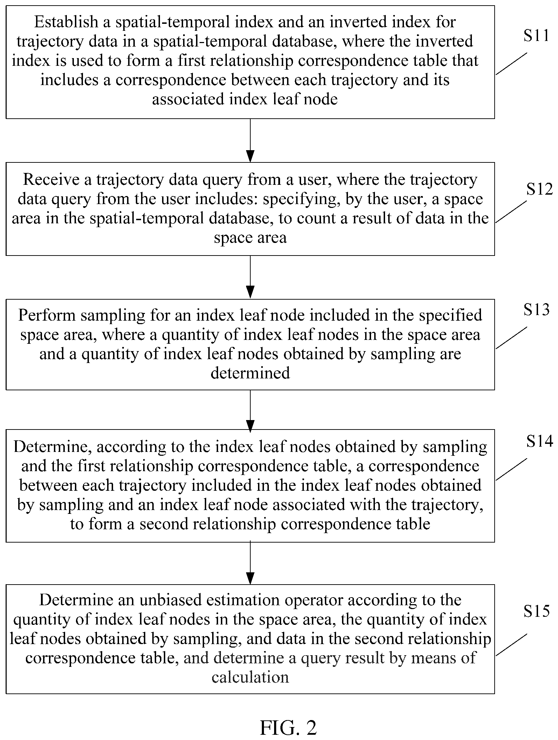

The present invention provides a trajectory data query method. As shown in FIG. 2, the method includes the following steps:

S11: Establish a spatial-temporal index and an inverted index for trajectory data in a spatial-temporal database, where the inverted index is used to form a first relationship correspondence table that includes a correspondence between each trajectory and its associated index leaf node.

In this step, forms of an association between "each trajectory and its associated index leaf node" may include the following three forms: a first form in which a trajectory passes through an index leaf node, that is, a middle portion of the trajectory is in the index leaf node; a second form in which the beginning or end of a trajectory is in an index leaf node; and a third form in which a trajectory is completely in an index leaf node.

In this step, because the trajectory data has time and space characteristics, an index needs to be established before the trajectory data is queried. In the prior art, only a spatial-temporal index is established, and is used to determine all index leaf nodes in the database. An index establishing method may adopt a method such as Quad-tree, B-tree, or B+-tree. However, in the present invention, in addition to the spatial index, an inverted index is also established. The inverted index is used to form the first relationship correspondence table that includes the correspondence between each trajectory and its associated index leaf node.

Optionally, in a specific embodiment of the present invention, a step of establishing the inverted index to form the first relationship correspondence table that includes the correspondence between each trajectory and its associated index leaf node may be divided into the following steps:

111: Determine all index leaf nodes in the database by means of the spatial-temporal index.
112: Determine, based on each trajectory in the spatial-temporal database, an index leaf node associated with each trajectory.

It may be understood that each trajectory in the spatial-temporal database may cross at least one index leaf node, and generally, one trajectory cannot cross all the index leaf nodes in the spatial-temporal database. Therefore, an index leaf node associated with each trajectory needs to be determined.

113: Store the correspondence between each trajectory and its associated index leaf node to form the first relationship correspondence table.

In step 113, each index leaf node further has ID information. That is, a corresponding ID (Identity, identity) may be set for each index leaf node. Therefore, in the first relationship correspondence table, the correspondence between each trajectory and its associated index leaf node is specifically a correspondence between each trajectory and an ID of at least one index leaf node associated with the trajectory.

It should be noted that, by means of the foregoing establishment of the inverted index, a correspondence between each trajectory in the spatial-temporal database and an index leaf node associated with the trajectory can be obtained.

It may be understood that the foregoing spatial index and inverted index are not re-established before each query. That is, once the spatial index and the inverted index are established, index data established by using the spatial index and the inverted index is stored. The stored data may be applied to multiple queries, thereby saving a query time. Certainly, a person skilled in the art may regularly update and establish the spatial index and the inverted index according to experience, which is not limited herein in the present invention.

S12: Receive a trajectory data query from a user, where the trajectory data query from the user includes: specifying, by the user, a space area in the spatial-temporal database, to count a result of data in the space area.

In this step, the trajectory data query from the user usually includes a query range and a query object. For example, if the trajectory data query from the user is "a quantity of taxi passenger trajectories in Beijing in 2013", "in 2013" and "in Beijing" are the query range, and "a quantity of taxi passenger trajectories" is the query object. It may be understood that, when the user gives a query range, a certain space area in the spatial-temporal database is also specified for a query.

S13: Perform sampling for an index leaf node included in the specified space area, where a quantity of index leaf nodes in the space area and a quantity of index leaf nodes obtained by sampling are determined.

Optionally, in a specific embodiment of the present invention, step S13 specifically includes:
performing random sampling with replacement for n index leaf nodes included in the determined space area, to obtain B repeatable index leaf nodes, where n>B, and both n and B are positive integers.

Therefore, an index leaf node obtained by sampling each time is placed back to an original space area after being recorded, so that the quantity of index leaf nodes in the space area is always n for each sampling.

A sampling method may be any sampling algorithm. in addition to the random sampling with replacement in this embodiment of the present invention, another sampling manner may be adopted, for example, biased sampling with replacement or biased sampling without replacement.

S14: Determine, according to the index leaf nodes obtained by sampling and the first relationship correspondence table, a correspondence between each trajectory included in the index leaf nodes obtained by sampling and an index leaf node associated with the trajectory, to form a second relationship correspondence table.

It should be noted that, in this embodiment of the present invention, the second relationship correspondence table is dynamically formed. That is, when the user performs a different query for the trajectory data, content in a generated second relationship correspondence table is also different. Therefore, it may be understood that this embodiment of the present invention focuses on how to generate the second relationship correspondence table, rather than the second relationship correspondence table itself.

Optionally, in a specific embodiment of the present invention, step S14 specifically includes:

141: List, according to the index leaf nodes obtained by sampling, multiple trajectories included in the index leaf nodes.
142: Obtain, from the first relationship correspondence table, at least one index leaf node associated with each trajectory in the multiple trajectories.
143: Determine whether the at least one index leaf node exists among the index leaf nodes obtained by sampling, and if a determining result is that the at least one index leaf node exists among the index leaf nodes obtained by sampling, reserve an index leaf node corresponding to the trajectory, and record, in the second relationship correspondence table, a correspondence between the index leaf node and the trajectory.

It should be noted that, for the obtaining, from the first relationship correspondence table, at least one index leaf node associated with each trajectory in the multiple trajectories, the index leaf node may be located inside the spatial-temporal area, or may be located outside the spatial-temporal area, and after the foregoing determining process, only the index leaf node in the spatial-temporal area is reserved.

Further, in a specific embodiment of the present invention, after the foregoing step 141, the following step may be further included:
determining whether a recurring trajectory exists among the multiple trajectories that are listed, and if a trajectory recurs, skipping listing the recurring trajectory, to ensure that multiple non-repeated trajectories are obtained.

In this case, step 142 is specifically: obtaining, from the first relationship correspondence table, at least one index leaf node associated with each trajectory in the multiple non-repeated trajectories.

It should be noted that, in the foregoing step of eliminating a recurring trajectory, the number of times of determining "whether the at least one index leaf node exists among the index leaf nodes obtained by sampling" in step 143 may be reduced, thereby shortening a determining time and improving efficiency.

S15: Determine an unbiased estimation operator according to the quantity of index leaf nodes in the space area, the quantity of index leaf nodes obtained by sampling, and data in the second relationship correspondence table, and determine a query result by means of calculation.

Optionally, in a specific embodiment of the present invention, step S15 specifically includes:

151: Calculate a quantity of index leaf nodes corresponding to each trajectory in the second relationship correspondence table.

152: Determine the unbiased estimation operator according to the quantity of index leaf nodes in the space area, the quantity of index leaf nodes obtained by sampling, a quantity of trajectories in the second relationship correspondence table, and a quantity of corresponding index leaf nodes that each trajectory passes through in the spatial-temporal area, and with reference to a probability statistical method and a law of large numbers, and determine the query result by means of calculation according to the unbiased estimation operator. The determining the unbiased estimation operator with reference to a probability statistical method and a law of large numbers is specifically divided into the following steps: first, determining a real value expression that includes information about all the leaf nodes in the specified area; and then, performing sampling for all the leaf nodes in the specified area, and determining the unbiased estimation operator by using information about the leaf nodes obtained by sampling, and with reference to the law of large numbers, to estimate a real value obtained by using the real value expression.

It should be noted that the unbiased estimation operator may be pre-determined as in the foregoing steps, and once the unbiased estimation operator is determined, the unbiased estimation operator can be directly applied to a subsequent same or similar query.

When a formula in step 152 uses unbiased estimation in calculation, it is proved by trials performed by the inventor that an accuracy rate of a query result determined by utilizing trajectory data obtained by sampling reaches 95% or above. Therefore, a query result determined by performing unbiased estimation for sampling data has relatively high accuracy.

It may be understood that, in this embodiment of the present invention, biased estimation or another estimation operator may be adopted, which is not specifically limited in the present invention.

Optionally, in a specific embodiment of the present invention, when the trajectory data query from the user is a trajectory count query (Count Query), the following unbiased estimation operator is determined, and a query result is determined by means of calculation:

$$\hat{N}_q = \frac{n}{B} \sum_{t=1}^{B} f_q(\hat{R}_t^q) \; ; \qquad (1)$$

where $f_q(\hat{R}_t^q) = \sum_{r \in \hat{R}_t \wedge q} \left\{ 1 / k_r^q \right\}$, where q represents a spatial-temporal area related to a query range of the user; n represents a quantity of all index leaf nodes in the spatial-temporal area q before sampling; B represents a quantity of index leaf nodes after the sampling, and in particular, when a sampling manner is the random sampling with replacement, the B leaf nodes may be repeatable, that is, each sampled leaf node is independently and randomly selected from all the leaf nodes in q; r represents a trajectory obtained according to the B index leaf nodes and a second relationship correspondence table obtained after the sampling; and $k_r^q$ represents a quantity of index leaf nodes that the trajectory r passes through in the queried spatial-temporal area q.

Optionally, in a specific embodiment of the present invention, when the trajectory data query from the user is a trajectory characteristic query (Sum Query), the following unbiased estimation operator is determined, and a query result is determined by means of calculation:

$$\hat{l}_q = \frac{n}{B} \sum_{t=1}^{B} h_q(\hat{R}_t^q) \; ; \qquad (2)$$

where $h_q(\hat{R}_t^q) = \sum_{r\in\hat{R}_t^q} l_r / k_r^q$ , where q represents a spatial-temporal area related to a query range of the user; n represents a quantity of all leaf nodes in the spatial-temporal area q before sampling; B represents a quantity of leaf nodes after the sampling, and in particular, when a sampling manner is the random sampling with replacement, the B leaf nodes may be repeatable, that is, each sampled leaf node is independently and randomly selected from all the leaf nodes in q; r represents a trajectory obtained according to the B index leaf nodes and a second relationship correspondence table obtained after the sampling; $l_r$ represents a trajectory characteristic of the trajectory r, where the trajectory characteristic is a statistical characteristic of a trajectory, for example, a quantity of kilometers, a quantity of crossed blocks, or lasting duration; and $k_r^q$ represents a quantity of index leaf nodes that the trajectory r passes through in the queried spatial-temporal area q.

Optionally, in a specific embodiment of the present invention, when the trajectory data query from the user is a query for an average trajectory characteristic value (Average Query), the following unbiased estimation operator is determined, and a query result is determined by means of calculation:

$$\hat{L}_q = \frac{\sum_{t=1}^{B} h_q(\hat{R}_t^q)}{\sum_{t=1}^{B} f_q(\hat{R}_t^q)} ; \qquad (3)$$

where $\hat{N}_q = f_q(\hat{R}_t^q) = \sum_{r\in\hat{R}_t^q \wedge q} \{1/k_r^q\}$ , $h_q(\hat{R}_t^q) = \sum_{r\in\hat{R}_t^q} l_r / k_r^q$ , where q represents a spatial-temporal area related to a query range of the user; n represents a quantity of all leaf nodes in the spatial-temporal area q before sampling; B represents a quantity of leaf nodes after the sampling, and in particular, when a sampling manner is the random sampling with replacement, the B leaf nodes may be repeatable, that is, each sampled leaf node is independently and randomly selected from all the leaf nodes in q; r represents a trajectory obtained according to the B index leaf nodes and a second relationship correspondence table obtained after the sampling; $l_r$ represents a trajectory characteristic of the trajectory r, where the trajectory characteristic is a statistical characteristic of a trajectory, for example, a quantity of kilometers, a quantity of crossed blocks, or lasting duration; and $k_r^q$ represents a quantity of index leaf nodes that the trajectory r passes through in the queried spatial-temporal area q.

According to the trajectory data query method provided in Embodiment 1 of the present invention, a spatial-temporal index and an inverted index are established for trajectory data in a spatial-temporal database, where the inverted index is used to form a first relationship correspondence table that includes a correspondence between each trajectory and its associated index leaf node; a trajectory data query from a user is received, where the trajectory data query from the user includes: specifying, by the user, a space area in the spatial-temporal database; sampling is performed for an index leaf node included in the specified space area, where a quantity of index leaf nodes in the space area and a quantity of index leaf nodes obtained by sampling are determined; a correspondence between each trajectory included in the index leaf nodes obtained by sampling and an index leaf node associated with the trajectory is determined according to the index leaf nodes obtained by sampling and the first relationship correspondence table, to form a second relationship correspondence table; and an unbiased estimation operator is determined according to the quantity of index leaf nodes in the space area, the quantity of index leaf nodes obtained by sampling, and data in the second relationship correspondence table, and a query result is determined by means of calculation. It can be seen from the above that, in addition to a spatial-temporal index, an inverted index is also established in the present invention. Therefore, according to the two indexes, a correspondence between a trajectory included in index leaf nodes obtained by sampling and an index leaf node associated with the trajectory can be determined, that is, a second relationship correspondence table is formed; and further a query result can be determined according to a quantity of index leaf nodes in a space area, a quantity of index leaf nodes obtained by sampling, and data in the second relationship correspondence table. This manner in which a spatial-temporal index and an inverted index are established and that is based on sampling can avoid scanning all trajectory data in a query-related spatial-temporal area, thereby shortening a query time, improving query efficiency, and saving a system resource. In addition, a query result determined by means of calculation by using an unbiased estimation operator has relatively high accuracy.

It should be noted that an application scenario in this embodiment of the present invention is not limited to querying some trajectory data from the spatial-temporal database, and may also be a scenario related to a trajectory data query. For example, when a carrier wants to provide, by utilizing trajectory data, a shop location service for an entity shop of another industry, for example, McDonald. If McDonald requires that a shop be located at a place with a largest flow of people, fast trajectory query can be used to quickly select several target areas and provide a suggestion and a plan for the shop to select an address. In addition, a traffic planning department may query, based on a city's taxi trajectory data, for distribution of taxi demands in each spatial-temporal area of the city, to find a place at which a taxi stand should be built.

To make a person skilled in the art have a better understanding of a technical solution of the trajectory data query method provided in the embodiments of the present invention, the trajectory data query method provided in the present invention is described in detail below by using a trajectory count query as an example.

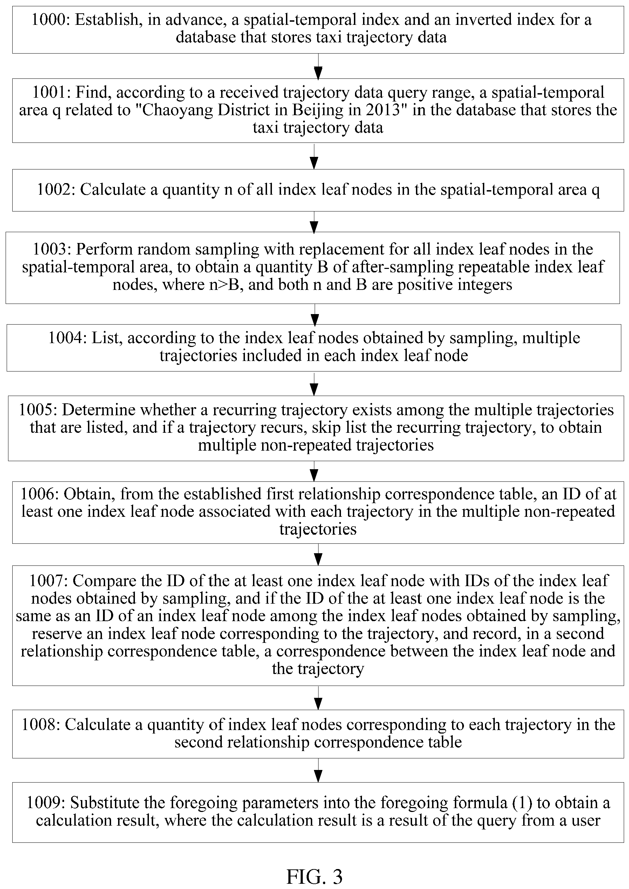

When a trajectory data query delivered by a user is "querying a quantity of all taxi passenger trajectories in Chaoyang District in Beijing in 2013", where "a quantity of all taxi passenger trajectories" is a query object and "Chaoyang District in Beijing in 2013" is a query range, the query corresponds to a particular spatial-temporal area in a spatial-temporal database. As shown in FIG. 3, specifically, the following steps are performed:

1000: Establish, in advance, a spatial-temporal index and an inverted index for a database that stores taxi trajectory data.

The spatial index is established to determine all index leaf nodes in the database, and the inverted index is established to form a first relationship correspondence table that includes a correspondence between each trajectory and an ID of an index leaf node associated with the trajectory.

1001: Find, according to a received trajectory data query range, a spatial-temporal area q related to "Chaoyang District in Beijing in 2013" in the database that stores the taxi trajectory data.

1002: Calculate a quantity n of all index leaf nodes in the spatial-temporal area q.

1003: Perform random sampling with replacement for all index leaf nodes in the spatial-temporal area, to obtain a quantity B of after-sampling repeatable index leaf nodes, where n>B, and both n and B are positive integers.

Because the random sampling with replacement is used, the B leaf nodes may be repeatable, that is, each sampled leaf node is independently and randomly selected from all the leaf nodes in q. In addition, the quantity of index leaf nodes may be flexibly set by a person skilled in the art according to an actual condition, which is not limited herein in the present invention.

1004: List, according to the index leaf nodes obtained by sampling, multiple trajectories included in each index leaf node.

1005: Determine whether a recurring trajectory exists among the multiple trajectories that are listed, and if a trajectory recurs, skip listing the recurring trajectory, to obtain multiple non-repeated trajectories.

1006: Obtain, from the established first relationship correspondence table, an ID of at least one index leaf node associated with each trajectory in the multiple non-repeated trajectories.

1007: Compare the ID of the at least one index leaf node with IDs of the index leaf nodes obtained by sampling, and if the ID of the at least one index leaf node is the same as an ID of an index leaf node among the index leaf nodes obtained by sampling, reserve an index leaf node corresponding to the trajectory, and record, in a second relationship correspondence table, a correspondence between the index leaf node and the trajectory.

1008: Calculate a quantity of index leaf nodes corresponding to each trajectory in the second relationship correspondence table, to obtain $k_r^q$.

1009: Substitute the foregoing parameters into the foregoing formula (1) to obtain a calculation result, where the calculation result is a result of the query from the user.

By using the foregoing steps, a query result can be obtained in a very short time, thereby improving query efficiency and saving a system resource.

In addition, when a trajectory data query is a trajectory characteristic query, for example, when a query is "querying total driving distance mileage of all taxi passenger trajectories in Chaoyang District in Beijing in 2013", on the basis of the foregoing steps 1000 to 1009, a quantity of kilometers corresponding to each trajectory in a second relationship correspondence table is further calculated, that is, the formula (2) may be applied to obtain a result to be queried by a user.

When a trajectory data query object is a query for an average trajectory characteristic value, for example, when a query is "querying an average speed of all taxi passenger trajectories in Chaoyang District in Beijing in 2013", on the basis of the foregoing steps 1000 to 1009, a quantity of kilometers corresponding to each trajectory in a second relationship correspondence table is further calculated, and the formula (3) is applied to obtain a result to be queried by a user.

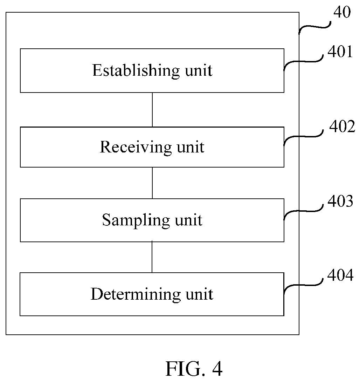

As shown in FIG. 4, the apparatus 40 includes:

an establishing unit 401, configured to establish a spatial-temporal index and an inverted index for trajectory data in a spatial-temporal database, where the inverted index is used to form a first relationship correspondence table that includes a correspondence between each trajectory and its associated index leaf node, and forms of an association between each trajectory and its associated index leaf node include: a middle portion of the trajectory passes through an index leaf node, the beginning or end of the trajectory is in an index leaf node, and the trajectory is completely in an index leaf node;

a receiving unit 402, configured to receive a trajectory data query from a user, where the trajectory data query from the user includes: specifying, by the user, a space area in the spatial-temporal database, to count a result of data in the space area;

a sampling unit 403, configured to perform sampling for an index leaf node included in the specified space area, where a quantity of index leaf nodes in the space area and a quantity of index leaf nodes obtained by sampling are determined; and

a determining unit 404, configured to determine, according to the index leaf nodes obtained by sampling by the sampling unit 403 and the first relationship correspondence table, a correspondence between each trajectory included in the index leaf nodes obtained by sampling and an index leaf node associated with the trajectory, to form a second relationship correspondence table, and configured to determine an unbiased estimation operator according to the quantity of index leaf nodes in the space area, the quantity of index leaf nodes obtained by sampling, and data in the second relationship correspondence table, and determine a query result by means of calculation.

In the trajectory data query apparatus 40 provided in Embodiment 3 of the present invention, the establishing unit 401 establishes a spatial-temporal index and an inverted index for trajectory data in a spatial-temporal database, where the inverted index is used to form a first relationship correspondence table that includes a correspondence between each trajectory and its associated index leaf node; the receiving unit 402 receives a trajectory data query from a user, where the trajectory data query from the user includes: specifying, by the user, a space area in the spatial-temporal database; the sampling unit 403 performs sampling for an index leaf node included in the specified space area, where a quantity of index leaf nodes in the space area and a quantity of index leaf nodes obtained by sampling are determined; and the determining unit 404 determines, according to the index leaf nodes obtained by sampling by the sampling unit 403 and the first relationship correspondence table, a correspondence between each trajectory included in the index leaf nodes obtained by sampling and an index leaf node associated with the trajectory, to form a second relationship correspondence table, and the determining unit 404 further determines an unbiased estimation operator according to the quantity of index leaf nodes in the space area, the quantity of index leaf nodes obtained by sampling, and data in the second relationship correspondence table, and determines a query result by means of calculation. It can be seen from the above that, in the present invention, in addition to a spatial-temporal index, the establishing unit 401 also establishes an inverted index. Therefore, the determining unit 404 may determine, according to the two indexes, a correspondence between a trajectory included in index leaf nodes obtained by sampling and an index leaf node associated with the trajectory, that is, form a second relationship correspondence table; and further, the determining unit 404 may determine an unbiased estimation operator according to a quantity of index leaf nodes in a space area, a quantity of index leaf nodes obtained by sampling, and data in the second relationship correspondence table, and determine a query result by means of calculation. The foregoing apparatus 40 that establishes a spatial-temporal index and an inverted index and is based on sampling can avoid scanning all trajectory data in a query-related spatial-temporal area, thereby shortening a query time, improving query efficiency, and saving a system resource. In addition, a query result determined by means of calculation by using an unbiased estimation operator has relatively high accuracy.

Optionally, in a specific embodiment of the present invention, the establishing unit 401 is specifically configured to:

determine all index leaf nodes in the spatial-temporal database by means of the spatial-temporal index;

determine, based on each trajectory in the spatial-temporal database, an index leaf node associated with each trajectory; and

store the correspondence between each trajectory and its associated index leaf node to form the first relationship correspondence table.

Optionally, in a specific embodiment of the present invention, the sampling unit 403 is specifically configured to: perform random sampling with replacement for n index leaf nodes included in the specified space area, to obtain B repeatable index leaf nodes, where $n > B$, and both $n$ and $B$ are positive integers.

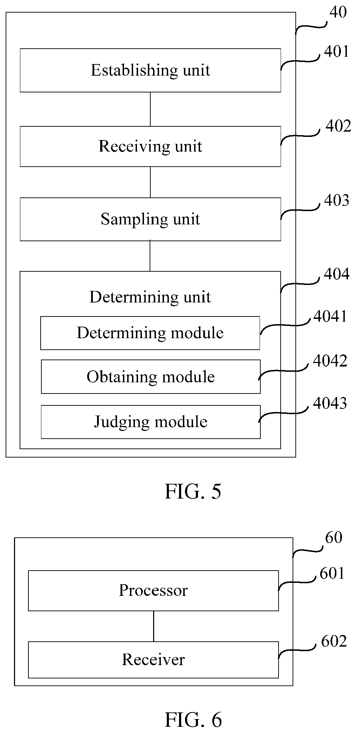

Optionally, in a specific embodiment of the present invention, as shown in FIG. 5, the determining unit 404 includes:

a determining module 4041, configured to list, according to the index leaf nodes obtained by sampling, multiple trajectories included in the index leaf nodes;

an obtaining module 4042, configured to obtain, from the first relationship correspondence table, at least one index leaf node associated with each trajectory in the multiple trajectories; and

a judging module 4043, configured to determine whether the at least one index leaf node obtained by the obtaining module exists among the index leaf nodes obtained by sampling by the sampling unit, and if a determining result is that the at least one index leaf node obtained by the obtaining module exists among the index leaf nodes obtained by sampling by the sampling unit, reserve an index leaf node corresponding to the trajectory, and record, in the second relationship correspondence table, a correspondence between the index leaf node and the trajectory.

Further, in a specific embodiment of the present invention, the determining module 4041 is further configured to:

determine whether a recurring trajectory exists among the multiple trajectories that are listed, and if a trajectory recurs, skip listing the recurring trajectory, to ensure that multiple non-repeated trajectories are obtained; and
in this case, the obtaining module 4042 is specifically configured to:
obtain, from the first relationship correspondence table, at least one index leaf node associated with each trajectory in the multiple non-repeated trajectories determined by the determining module.

Optionally, in a specific embodiment of the present invention, the determining unit 404 is specifically configured to:

calculate a quantity of index leaf nodes corresponding to each trajectory in the second relationship correspondence table; and
determine the unbiased estimation operator according to the quantity of index leaf nodes in the space area, the quantity of index leaf nodes obtained by sampling, a quantity of trajectories in the second relationship correspondence table, and a quantity of corresponding index leaf nodes that each trajectory passes through in the spatial-temporal area, and with reference to a probability statistical method and a law of large numbers, and determine the query result by means of calculation according to the unbiased estimation operator, where the determining the unbiased estimation operator with reference to a probability statistical method and a law of large numbers is specifically: determining a real value expression that includes information about all the leaf nodes in the specified area; and then, performing sampling for all the leaf nodes in the specified area, and determining the unbiased estimation operator by using information about the leaf nodes obtained by sampling, and with reference to the law of large numbers, to estimate a real value obtained by using the real value expression.

It should be noted that, for a specific function of each structural unit of the trajectory data query apparatus 40 provided in Embodiment 3 of the present invention, refer to the foregoing method Embodiment 1 or 2.
As shown in FIG. 6, the apparatus 60 includes:

a processor 601, configured to establish a spatial-temporal index and an inverted index for trajectory data in a spatial-temporal database, where the inverted index is used to form a first relationship correspondence table that includes a correspondence between each trajectory and its associated index leaf node, and forms of an association between each trajectory and its associated index leaf node include: a middle portion of the trajectory passes through an index leaf node, the beginning or end of the trajectory is in an index leaf node, and the trajectory is completely in an index leaf node; and
a receiver 602, configured to receive a trajectory data query from a user, where the trajectory data query from the user includes: specifying, by the user, a space area in the spatial-temporal database, to count a result of data in the space area, where
the processor 601 is further configured to perform sampling for an index leaf node included in the specified space area, where a quantity of index leaf nodes in the space area and a quantity of index leaf nodes obtained by sampling are determined, and determine, according to the index leaf nodes obtained by sampling and the first relationship correspondence table, a correspondence between each trajectory included in the index leaf nodes obtained by sampling and an index leaf node associated with the trajectory, to form a second relationship correspondence table; and configured to determine an unbiased estimation operator according to the quantity of index leaf nodes in the space area, the quantity of index leaf nodes obtained by sampling, and data in the second relationship correspondence table, and determine a query result by means of calculation.

In the trajectory data query apparatus 60 provided in Embodiment 4 of the present invention, the processor 601 establishes a spatial-temporal index and an inverted index for trajectory data in a spatial-temporal database, where the inverted index is used to form a first relationship correspondence table that includes a correspondence between each trajectory and its associated index leaf node; and when the receiver 602 receives a trajectory data query from a user, where the trajectory data query from the user includes: specifying, by the user, a space area in the spatial-temporal database, the processor 601 performs sampling for an index leaf node included in the specified space area, where a quantity of index leaf nodes in the space area and a quantity of index leaf nodes obtained by sampling are determined, determines, according to the index leaf nodes obtained by sampling and the first relationship correspondence table, a correspondence between each trajectory included in the index leaf nodes obtained by sampling and an index leaf node associated with the trajectory, to form a second relationship correspondence table, and further determines a query result according to the quantity of index leaf nodes in the space area, the quantity of index leaf nodes obtained by sampling, and data in the second relationship correspondence table . It can be seen from the above that, in the present invention, in addition to a spatial-temporal index, the processor 601 also establishes an inverted index. Therefore, according to the two indexes, a correspondence between a trajectory included in index leaf nodes obtained by sampling and an index leaf node associated with the trajectory can be determined, that is, a second relationship correspondence table is formed; and further an unbiased estimation operator can be determined according to a quantity of index leaf nodes in a space area, a quantity of index leaf nodes obtained by sampling, and data in the second relationship correspondence table, and a query result can be determined by means of calculation. The foregoing apparatus 60 that establishes a spatial-temporal index and an inverted index and is based on sampling can avoid scanning all trajectory data in a query-related spatial-temporal area, thereby shortening a query time, improving query efficiency, and saving a system resource. In addition, a query result determined by means of calculation by using an unbiased estimation operator has relatively high accuracy.

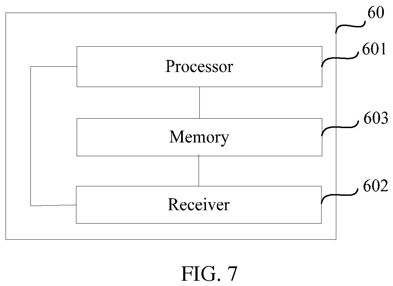

Optionally, in a specific embodiment of the present invention, as shown in FIG. 7, the processor 601 is specifically configured to:

determine all index leaf nodes in the spatial-temporal database by means of the spatial-temporal index, and determine, based on each trajectory in the database, an index leaf node associated with each trajectory; and
a memory 603 is configured to store the correspondence between each trajectory and its associated index leaf node to form the first relationship correspondence table.

Optionally, in a specific embodiment of the present invention, the processor 601 is specifically configured to: perform random sampling with replacement for n index leaf nodes included in the specified space area, to obtain B repeatable index leaf nodes, where n>B, and both n and B are positive integers.

Optionally, in a specific embodiment of the present invention, the processor 601 is specifically configured to: list, according to the index leaf nodes obtained by sampling, multiple trajectories included in the index leaf nodes; obtain, from the first relationship correspondence table, at least one index leaf node associated with each trajectory in the multiple trajectories; and determine whether the at least one index leaf node obtained by the processor 601e exists among the index leaf nodes obtained by sampling, and if a determining result is that the at least one index leaf node obtained by the processor 601 exists among the index leaf nodes obtained by sampling, reserve an index leaf node corresponding to the trajectory, and record, in the second relationship correspondence table, a correspondence between the index leaf node and the trajectory.

Optionally, in a specific embodiment of the present invention, the processor 601 is specifically configured to: determine whether a recurring trajectory exists among the multiple trajectories that are listed, and if a trajectory recurs, skip listing the recurring trajectory, to ensure that multiple non-repeated trajectories are obtained; and obtain, from the first relationship correspondence table, at least one index leaf node associated with each trajectory in the multiple non-repeated trajectories determined by the processor 601.

Optionally, in a specific embodiment of the present invention, the processor 601 is specifically configured to: calculate a quantity of index leaf nodes corresponding to each trajectory in the second relationship correspondence table; and determine the unbiased estimation operator according to the quantity of index leaf nodes in the space area, the quantity of index leaf nodes obtained by sampling, a quantity of trajectories in the second relationship correspondence table, and a quantity of corresponding index leaf nodes that each trajectory passes through in the spatial-temporal area, and with reference to a probability statistical method and a law of large numbers, and determine the query result by means of calculation according to the unbiased estimation operator, where the determining the unbiased estimation operator with reference to a probability statistical method and a law of large numbers is specifically: determining a real value expression that includes information about all the leaf nodes in the specified area; and then, performing sampling for all the leaf nodes in the specified area, and determining the unbiased estimation operator by using information about the leaf nodes obtained by sampling, and with reference to the law of large numbers, to estimate a real value obtained by using the real value expression.

It should be noted that, for a specific function of each structural unit of the trajectory data query apparatus 60 provided in Embodiment 4 of the present invention, refer to the foregoing method Embodiment 1 or 2.

A person of ordinary skill in the art may understand that all or some of the steps of the methods in the embodiments may be implemented by a program instructing relevant hardware. The program may be stored in a computer-readable storage medium. The storage medium may be a read-only memory, a magnetic disc, an optical disc, or the like.

**Claims**

1. A trajectory data query method in a spatial-temporal database, wherein a spatial-temporal index and an inverted index for trajectory data is established, wherein the inverted index is used to form a first relationship correspondence table that comprises a correspondence between each trajectory and at least one index leaf node associated with the trajectory, wherein forms of an association between each trajectory and its associated index leaf node comprise: a middle portion of the trajectory passes through the index leaf node, the beginning or end of the trajectory is in the index leaf node, and the trajectory is completely in the index leaf node, the method comprising:

   receiving a trajectory data query from a user, wherein the trajectory data query from the user comprises: specifying, by the user, a space area in the spatial-temporal database, to count trajectories in the space area;
   performing sampling for index leaf nodes comprised in the specified space area, and determining a quantity of index leaf nodes in the space area and a quantity of index leaf nodes obtained by sampling;
   determining, according to the index leaf nodes obtained by sampling and the first relationship correspondence table, a correspondence between each trajectory comprised in the index leaf nodes obtained by sampling and an index leaf node associated with the trajectory, to form a second relationship correspondence table; and
   determining an unbiased estimation operator according to the quantity of index leaf nodes in the space area, the quantity of index leaf nodes obtained by sampling, and data in the second relationship correspondence table, and determining a query result by means of calculation;
   wherein multiple space-time points exist in a spatial-temporal database, each space-time point has time and space information about time, longitude, and latitude, each space-time point further has identification information, and space-time points with same identification information form a trajectory;
   wherein the determining, according to the index leaf nodes obtained by sampling and the first relationship correspondence table, a correspondence between each trajectory comprised in the index leaf nodes obtained by sampling and an index leaf node associated with the trajectory, to form a second relationship correspondence table comprises:

      listing, according to the index leaf nodes obtained by sampling, multiple trajectories comprised in the index leaf nodes;
      obtaining, from the first relationship correspondence table, at least one index leaf node associated with each trajectory in the multiple trajectories; and
      determining whether the at least one index leaf node exists among the index leaf nodes obtained by sampling, and if a determining result is that the at least one index leaf node exists among the index leaf nodes obtained by sampling, reserving an index leaf node corresponding to the trajectory, and recording, in the second relationship correspondence table, a correspondence between the index leaf node and the trajectory.

2. The method according to claim 1, wherein the forming a first relationship correspondence table that comprises a correspondence between each trajectory and its associated index leaf node comprises:

   determining all index leaf nodes in the spatial-temporal database by means of the spatial-temporal index;
   determining, based on each trajectory in the spatial-temporal database, an index leaf node associated with each trajectory; and
   storing the correspondence between each trajectory and its associated index leaf node to form the first relationship correspondence table.

3. The method according to claim 1 or 2, wherein:
   the performing sampling for an index leaf node comprised in the space area, wherein a quantity of index leaf nodes in the space area and a quantity of index leaf nodes obtained by sampling are determined is specifically:
   performing random sampling with replacement for n index leaf nodes comprised in the specified space area, to obtain B repeatable index leaf nodes, wherein n>B, and both n and B are positive integers.

4. The method according to any of claims 1 to 3, wherein after the listing, according to the index leaf nodes obtained by sampling, multiple trajectories comprised in the index leaf nodes, the method further comprises:

   determining whether a recurring trajectory exists among the multiple trajectories that are listed, and if a trajectory recurs, skipping listing the recurring trajectory, to ensure that multiple non-repeated trajectories are obtained; and
   the obtaining, from the first relationship correspondence table, at least one index leaf node associated with each trajectory in the multiple trajectories is specifically:

obtaining, from the first relationship correspondence table, at least one index leaf node associated with each trajectory in the multiple non-repeated trajectories.

5. The method according to any one of claims 1 to 4, wherein the determining an unbiased estimation operator according to the quantity of index leaf nodes in the space area, the quantity of index leaf nodes obtained by sampling, and data in the second relationship correspondence table, and determining a query result by means of calculation comprises:

calculating a quantity of index leaf nodes corresponding to each trajectory in the second relationship correspondence table; and

determining the unbiased estimation operator according to the quantity of index leaf nodes in the space area, the quantity of index leaf nodes obtained by sampling, a quantity of trajectories in the second relationship correspondence table, and a quantity of corresponding index leaf nodes that each trajectory passes through in the spatial-temporal area, and with reference to a probability statistical method and a law of large numbers, and determining the query result by means of calculation according to the unbiased estimation operator, wherein the determining the unbiased estimation operator with reference to a probability statistical method and a law of large numbers is specifically: determining a real value expression that comprises information about all the leaf nodes in the specified area; and then, performing sampling for all the leaf nodes in the specified area, and determining the unbiased estimation operator by using information about the leaf nodes obtained by sampling, and with reference to the law of large numbers, to estimate a real value obtained by using the real value expression.

6. The method according to claim 5, wherein when the trajectory data query from the user is a trajectory count query, the following unbiased estimation operator is determined, and a query result is determined by means of calculation:

$$\hat{N}_q = \frac{n}{B} \sum_{t=1}^{B} f_q(\hat{R}_t^q),$$

wherein $f_q(\hat{R}_t^q) = \sum_{r \in \hat{R}_t^q \wedge q} \left\{ 1 / k_r^q \right\}$, wherein q represents a spatial-temporal area related to a query range of the user; n represents a quantity of all index leaf nodes in the spatial-temporal area q before sampling; B represents a quantity of index leaf nodes after the sampling when the trajectory data query from the user is a trajectory count query; r represents a trajectory obtained according to the B index leaf nodes and a second relationship correspondence table obtained after the sampling; and $k_r^q$ represents a quantity of index leaf nodes that the trajectory r passes through in the queried spatial-temporal area q.

7. The method according to claim 5, wherein when the trajectory data query from the user is a trajectory characteristic query, the following unbiased estimation operator is determined, and a query result is determined by means of calculation:

$$\hat{l}_q = \frac{n}{B} \sum_{t=1}^{B} h_q(\hat{R}_t^q),$$

wherein $h_q(\hat{R}_t^q) = \sum_{r \in \hat{R}_t^q} l_r / k_r^q$ wherein q represents a spatial-temporal area related to a query range of the user; n represents a quantity of all index leaf nodes in the spatial-temporal area q before sampling; B represents a quantity of index leaf nodes after the sampling; r represents a trajectory obtained according to the B index leaf nodes and a second relationship correspondence table obtained after the sampling; $l_r$ represents a trajectory characteristic of the trajectory r; and $k_r^q$ represents a quantity of index leaf nodes that the trajectory r passes through in the queried spatial-temporal area q.

8. The method according to claim 5, wherein when the trajectory data query from the user is a query for an average trajectory characteristic value, the following unbiased estimation operator is determined, and a query result is determined by means of calculation:

$$\hat{L}_q = \frac{\sum_{t=1}^{B} h_q(\hat{R}_t^q)}{\sum_{t=1}^{B} f_q(\hat{R}_t^q)},$$

wherein $\hat{N}_q = f_q(\hat{R}_t^q) = \sum_{r \in \hat{R}_t^q \wedge q} \{1/k_r^q\}$, $h_q(\hat{R}_t^q) = \sum_{r \in \hat{R}_t^q} l_r / k_r^q$, wherein q represents a spatial-temporal area related to a query range of the user; n represents a quantity of index leaf nodes in the spatial-temporal area q before sampling; B represents a quantity of index leaf nodes after the sampling; r represents a trajectory obtained according to the B index leaf nodes and a second relationship correspondence table obtained after the sampling; $l_r$ represents a trajectory characteristic of the trajectory r; and $k_r^q$ represents a quantity of index leaf nodes that the trajectory r passes through in the queried spatial-temporal area q.

9. A trajectory data query apparatus in a spatial-temporal database, wherein a spatial-temporal index and an inverted index for trajectory data is established, wherein the inverted index is used to form a first relationship correspondence table that comprises a correspondence between each trajectory and at least one index leaf node associated with the trajectory, wherein forms of an association between each trajectory and its associated index leaf node comprise: a middle portion of the trajectory passes through the index leaf node, the beginning or end of the trajectory is in the index leaf node, and the trajectory is completely in the index leaf node, comprising:

a receiver, configured to receive a trajectory data query from a user, wherein the trajectory data query from the user comprises: specifying, by the user, a space area in the spatial-temporal database, to count trajectories in the space area, and
a processor is configured to perform sampling for index leaf nodes comprised in the specified space area, wherein a quantity of index leaf nodes in the space area and a quantity of index leaf nodes obtained by sampling are determined, and determine, according to the index leaf nodes obtained by sampling and the first relationship correspondence table, a correspondence between each trajectory comprised in the index leaf nodes obtained by sampling and an index leaf node associated with the trajectory, to form a second relationship correspondence table; and configured to determine an unbiased estimation operator according to the quantity of index leaf nodes in the space area, the quantity of index leaf nodes obtained by sampling, and data in the second relationship correspondence table, and determine a query result by means of calculation;
wherein multiple space-time points exist in a spatial-temporal database, each space-time point has time and space information about time, longitude, and latitude, each space-time point further has identification information, and space-time points with same identification information form a trajectory;
wherein the processor is specifically configured to:

list, according to the index leaf nodes obtained by sampling, multiple trajectories comprised in the index leaf nodes;
obtain, from the first relationship correspondence table, at least one index leaf node associated with each trajectory in the multiple trajectories; and
determine whether the at least one index leaf node obtained exists among the index leaf nodes obtained by sampling, and if a determining result is that the at least one index leaf node obtained by the obtaining module exists among the index leaf nodes obtained by sampling by the sampling unit, reserve an index leaf node corresponding to the trajectory, and record, in the second relationship correspondence table, a correspondence between the index leaf node and the trajectory.

10. The apparatus according to claim 9, wherein the processor is specifically configured to:

determine all index leaf nodes in the spatial-temporal database by means of the spatial-temporal index;
determine, based on each trajectory in the spatial-temporal database, an index leaf node associated with each trajectory; and

store the correspondence between each trajectory and its associated index leaf node to form the first relationship correspondence table.

11. The apparatus according to claims 9 or 10, wherein:
the processor is specifically configured to:
perform random sampling with replacement for n index leaf nodes comprised in the specified space area, to obtain B repeatable index leaf nodes, wherein n>B, and both n and B are positive integers.

12. The apparatus according to any of claims 9 to 11, wherein:
the processor is specifically configured to:

determine whether a recurring trajectory exists among the multiple trajectories that are listed, and if a trajectory recurs, skip listing the recurring trajectory, to ensure that multiple non-repeated trajectories are obtained; and obtain, from the first relationship correspondence table, at least one index leaf node associated with each trajectory in the multiple non-repeated trajectories .

13. The apparatus according to any one of claims 9 to 12, wherein:
the processor is specifically configured to:

calculate a quantity of index leaf nodes corresponding to each trajectory in the second relationship correspondence table; and
determine the unbiased estimation operator according to the quantity of index leaf nodes in the space area, the quantity of index leaf nodes obtained by sampling, a quantity of trajectories in the second relationship correspondence table, and a quantity of corresponding index leaf nodes that each trajectory passes through in the spatial-temporal area, and with reference to a probability statistical method and a law of large numbers, and determine the query result by means of calculation according to the unbiased estimation operator, wherein the determining the unbiased estimation operator with reference to a probability statistical method and a law of large numbers is specifically: determining a real value expression that comprises information about all the leaf nodes in the specified area; then, performing sampling for all the leaf nodes in the specified area, and determining the unbiased estimation operator by using information about the leaf nodes obtained by sampling, and with reference to the law of large numbers, to estimate a real value obtained by using the real value expression.


**Patentansprüche**

1. Abfrageverfahren für Trajektoriedaten in einer räumlich-zeitlichen Datenbank, wobei ein räumlich-zeitlicher Index und ein invertierter Index für Trajektoriedaten erstellt werden, wobei der invertierte Index verwendet wird, um eine erste Beziehungskorrespondenztabelle zu bilden, die eine Korrespondenz zwischen jeder Trajektorie und mindestens einem mit der Trajektorie assoziierten Index-Blattknoten umfasst, wobei Formen einer Verbindung zwischen jeder Trajektorie und ihrem assoziierten Index-Blattknoten umfassen: ein mittlerer Abschnitt der Trajektorie verläuft durch den Index-Blattknoten, der Anfang oder das Ende der Trajektorie ist im Index-Blattknoten, und die Trajektorie ist vollständig im Index-Blattknoten, wobei das Verfahren umfasst:

Empfangen einer Trajektoriedaten-Abfrage durch einen Benutzer, wobei die Trajektoriedaten-Abfrage vom Benutzer umfasst: Angeben eines Raumbereichs in der räumlich-zeitlichen Datenbank durch den Benutzer, um Trajektoriedaten im Raumbereich zu zählen;
Durchführen von Probenentnahmen für im angegebenen Raumbereich umfasste Index-Blattknoten und Bestimmen einer Menge von Index-Blattknoten im Raumbereich und einer Menge von durch Probenentnahme erhaltenen Index-Blattknoten;
Bestimmen, entsprechend den durch Probenentnahme erhaltenen Index-Blattknoten und der ersten Beziehungskorrespondenztabelle, einer Korrespondenz zwischen jeder in den durch Probenentnahme erhaltenen Index-Blattknoten umfassten Trajektorie und einem mit der Trajektorie assoziierten Index-Blattknoten, um eine zweite Beziehungskorrespondenztabelle zu bilden; und
Bestimmen eines unverzerrten Schätzoperators entsprechend der Menge von Index-Blattknoten im Raumbereich, der Menge von durch Probenentnahme erhaltenen Index-Blattknoten und Daten in der zweiten Beziehungskorrespondenztabelle, und Bestimmen eines Abfrageergebnisses mittels Berechnung;
wobei in einer räumlich-zeitlichen Datenbank mehrere Raum-Zeit-Punkte vorliegen und jeder Raum-Zeit-Punkt Zeit- und Rauminformationen zu Zeit, Längengrad und Breitengrad aufweist, wobei jeder Raum-Zeit-Punkt weiter Identifizierungsinformationen aufweist und Raum-Zeit-Punkte mit gleichen Identifizierungsinformationen eine Trajektorie bilden;

wobei die Bestimmung, entsprechend den durch Probenentnahme erhaltenen Index-Blattknoten und der ersten Beziehungskorrespondenztabelle, einer Korrespondenz zwischen jeder in den durch Probenentnahme erhaltenen Index-Blattknoten umfassten Trajektorie und einem mit der Trajektorie assoziierten Index-Blattknoten zum Bilden einer zweiten Beziehungskorrespondenztabelle umfasst:

Auflisten, entsprechend den durch Probenentnahme erhaltenen Index-Blattknoten, von mehreren in den Index-Blattknoten umfassten Trajektorien;

Erhalten von mindestens einem mit jeder Trajektorie in den mehreren Trajektorien assoziierten Index-Blattknoten aus der ersten Beziehungskorrespondenztabelle; und

Bestimmen, ob der mindestens eine Index-Blattknoten unter den durch Probenentnahme erhaltenen Index-Blattknoten vorliegt, und, falls ein Bestimmungsergebnis lautet, dass der mindestens eine Index-Blattknoten unter den durch Probenentnahme erhaltenen Index-Blattknoten vorliegt, Reservieren eines Index-Blattknotens, der der Trajektorie entspricht, und Erfassen einer Korrespondenz zwischen dem Index-Blattknoten und der Trajektorie in der zweiten Beziehungskorrespondenztabelle.

2.  Verfahren nach Anspruch 1, wobei das Bilden einer ersten Beziehungskorrespondenztabelle, die eine Korrespondenz zwischen jeder Trajektorie und ihrem assoziierten Index-Blattknoten umfasst, Folgendes umfasst:

Bestimmen aller Index-Blattknoten in der räumlich-zeitlichen Datenbank mittels des räumlich-zeitlichen Index;

Bestimmen, basierend auf jeder Trajektorie in der räumlich-zeitlichen Datenbank, eines mit jeder Trajektorie assoziierten Index-Blattknotens; und

Speichern der Korrespondenz zwischen jeder Trajektorie und ihrem assoziierten Index-Blattknoten, um die erste Beziehungskorrespondenztabelle zu bilden.

3.  Verfahren nach Anspruch 1 oder 2, wobei Folgendes gilt:

die Durchführung von Probenentnahme für einen im Raumbereich umfassten Index-Blattknoten, wobei eine Menge von Index-Blattknoten im Raumbereich und eine Menge von durch Probenentnahme erhaltenen Index-Blattknoten bestimmt werden, ist im Einzelnen wie folgt:

Durchführen von zufälliger Probenentnahme mit Ersatz für n im angegebenen Raumbereich umfassten Index-Blattknoten, um B wiederholbare Index-Blattknoten zu erhalten, wobei $n>B$ und sowohl n als auch B positive Ganzzahlen sind.

4.  Verfahren nach einem der Ansprüche 1 bis 3, wobei das Verfahren nach dem Auflisten von mehreren in den Index-Blattknoten umfassten Trajektorien entsprechend den durch Probenentnahme erhaltenen Index-Blattknoten weiter umfasst:

Bestimmen, ob eine wiederkehrende Trajektorie unter den mehreren aufgelisteten Trajektorien vorliegt, und, falls eine Trajektorie wiederkehrt, Auslassen der Auflistung der wiederkehrenden Trajektorie, um sicherzustellen, dass mehrere nicht wiederholte Trajektorien erhalten werden; und

wobei das Erhalten von mindestens einem mit jeder Trajektorie in den mehreren Trajektorien assoziierten Index-Blattknoten aus der ersten Beziehungskorrespondenztabelle im Einzelnen wie folgt erfolgt:

Erhalten von mindestens einem mit jeder Trajektorie in den mehreren nicht wiederholten Trajektorien assoziierten Index-Blattknoten aus der ersten Beziehungskorrespondenztabelle.

5.  Verfahren nach einem der Ansprüche 1 bis 4, wobei die Bestimmung eines unverzerrten Schätzoperators entsprechend der Menge von Index-Blattknoten im Raumbereich, der Menge von durch Probenentnahme erhaltenen Index-Blattknoten und Daten in der zweiten Beziehungskorrespondenztabelle und das Bestimmen eines Abfrageergebnisses mittels einer Berechnung Folgendes umfassen:

Berechnen einer Menge von Index-Blattknoten, die jeder Trajektorie in der zweiten Beziehungskorrespondenztabelle entsprechen; und

Bestimmen des unverzerrten Schätzoperators entsprechend der Menge von Index-Blattknoten im Raumbereich, der Menge von durch Probenentnahme erhaltenen Index-Blattknoten, einer Menge von Trajektorien in der zweiten Beziehungskorrespondenztabelle und einer Menge von entsprechenden Index-Blattknoten, die jede Trajektorie durch den räumlich-zeitlichen Bereich leitet, sowie mit Bezug auf ein statistisches Wahrscheinlichkeitsverfahren und ein Gesetz der großen Zahlen, und Bestimmen des Abfrageergebnisses mittels Berechnung entsprechend dem unverzerrten Schätzoperator, wobei
das Bestimmen des unverzerrten Schätzoperators mit Bezug auf ein statistisches Wahrscheinlichkeitsverfahren und ein Gesetz der großen Zahlen im Einzelnen wie folgt erfolgt: Bestimmen eines reellen Wertausdrucks, der Informationen zu allen Blattknoten im angegebenen Bereich umfasst; und anschließendes Durchführen von Probenentnahmen für alle Blattknoten im angegebenen Bereich und Bestimmen des unverzerrten Schätzoperators unter Verwendung von Informationen zu den durch Probenentnahme erhaltenen Blattknoten und mit Bezug auf das Gesetz der großen Zahlen, um einen unter Verwendung des reellen Wertausdrucks erhaltenen reellen Wert zu schätzen.

6. Verfahren nach Anspruch 5, wobei die Trajektoriedaten-Abfrage durch den Benutzer eine Trajektorie-Zählabfrage ist, wobei der folgende unverzerrte Schätzoperator bestimmt wird und ein Abfrageergebnis mittels Berechnung bestimmt wird:

$$\hat{N}_q = \frac{n}{B} \sum_{t=1}^{B} f_q(\hat{R}_t^{\,q}),$$

wobei $f_q(\hat{R}_t^{\,q}) = \sum_{r \in \hat{R}_t \wedge q} \left\{ 1/k_r^q \right\}$, wobei q einen räumlich-zeitlichen Bereich mit Bezug auf einen Abfragebereich des Benutzers darstellt; wobei n eine Menge aller Index-Blattknoten im räumlich-zeitlichen Bereich q vor der Probenentnahme wiedergibt; wobei B eine Menge von Index-Blattknoten nach der Probenentnahme darstellt, wenn die Trajektoriedaten-Abfrage durch den Benutzer eine Trajektorie-Zählabfrage ist; wobei r eine entsprechend den B Index-Blattknoten und einer nach der Probenentnahme erhaltenen zweiten Beziehungskorrespondenztabelle erhaltene Trajektorie ist; und wobei $k_r^q$ eine Menge von Index-Blattknoten wiedergibt, die die Trajektorie r im abgefragten räumlich-zeitlichen Bereich q durchleitet.

7. Verfahren nach Anspruch 5, wobei, wenn die Trajektoriedaten-Abfrage durch den Benutzer eine Trajektoriekennlinien-Abfrage ist, der folgende unverzerrte Schätzoperator bestimmt wird und ein Abfrageergebnis mittels Berechnung bestimmt wird:

$$\hat{l}_q = \frac{n}{B} \sum_{t=1}^{B} h_q(\hat{R}_t^{\,q}),$$

wobei $h_q(\hat{R}_t^{\,q}) = \sum_{r \in \hat{R}_t^{\,q}} l_r / k_r^q$, wobei q einen räumlich-zeitlichen Bereich mit Bezug auf einen Abfragebereich des Benutzers darstellt; wobei n eine Menge aller Index-Blattknoten im räumlich-zeitlichen Bereich q vor der Probenentnahme wiedergibt; wobei B eine Menge von Index-Blattknoten nach der Probenentnahme darstellt; wobei r eine entsprechend den B Index-Blattknoten und einer nach der Probenentnahme erhaltenen zweiten Beziehungskorrespondenztabelle erhaltenen Trajektorie wiedergibt; wobei $l_r$ eine Trajektoriekennlinie der Trajektorie r wiedergibt; und wobei $k_r^q$ eine Menge von Index-Blattknoten darstellt, die die Trajektorie r im abgefragten räumlich-zeitlichen Bereich q durchleitet.

8. Verfahren nach Anspruch 5, wobei, wenn die Trajektoriedaten-Abfrage durch den Benutzer eine Abfrage eines durchschnittlichen Trajektoriekennlinien-Werts ist, der folgende unverzerrte Schätzoperator bestimmt wird und ein Abfrageergebnis mittels Berechnung bestimmt wird:

$$\hat{L}_q = \frac{\sum_{t=1}^{B} h_q(\hat{R}_t^{\,q})}{\sum_{t=1}^{B} f_q(\hat{R}_t^{\,q})},$$

wobei $\hat{N}_q = f_q(\hat{R}_t^{\,q}) = \sum_{r \in \hat{R}_t \wedge q} \left\{ 1/k_r^q \right\}$, $h_q(\hat{R}_t^{\,q}) = \sum_{r \in \hat{R}_t^{\,q}} l_r / k_r^q$, wobei q einen räumlich-zeitlichen Bereich mit Bezug auf einen Abfragebereich des Benutzers darstellt; wobei n eine Menge aller Index-Blattknoten im räumlich-zeitlichen Bereich q vor der Probenentnahme wiedergibt; wobei B eine Menge von Index-Blattknoten nach der Probenentnahme darstellt; wobei r eine entsprechend den B Index-Blattknoten und einer nach der Probenentnahme erhaltenen zweiten Beziehungskorrespondenztabelle erhaltenen Trajektorie wiedergibt; wobei $I_r$ eine Trajektorie-kennlinie der Trajektorie r wiedergibt; und wobei $k_r^q$ eine Menge von Index-Blattknoten darstellt, die die Trajektorie r im abgefragten räumlich-zeitlichen Bereich q durchleitet.

9.  Trajektoriedaten-Abfragevorrichtung in einer räumlich-zeitlichen Datenbank, wobei ein räumlich-zeitlicher Index und ein invertierter Index für Trajektoriedaten aufgestellt werden, wobei der invertierte Index verwendet wird, um eine erste Beziehungskorrespondenztabelle zu bilden, die eine Korrespondenz zwischen jeder Trajektorie und mindestens einem mit der Trajektorie assoziierten Index-Blattknoten umfasst, wobei Formen einer Verbindung zwischen jeder Trajektorie und ihrem assoziierten Index-Blattknoten umfassen: ein mittlerer Abschnitt der Trajektorie verläuft durch den Index-Blattknoten, der Anfang oder das Ende der Trajektorie ist im Index-Blattknoten, und die Trajektorie ist vollständig im Index-Blattknoten, Folgendes umfassend:
    einen Empfänger, ausgelegt zum Empfangen einer Trajektoriedaten-Ab frage durch einen Benutzer, wobei die Trajektoriedaten-Abfrage durch den Benutzer umfasst:

    benutzerseitiges Angeben eines Raumbereichs in der räumlich-zeitlichen Datenbank, um Trajektorie in dem Raumbereich zu zählen, und
    einen Prozessor, ausgelegt zum Durchführen von Probenentnahmen für im angegebenen Raumbereich umfasste Index-Blattknoten, wobei eine Menge von Index-Blattknoten im Raumbereich und eine Menge von durch Probenentnahme erhaltenen Index-Blattknoten bestimmt werden, und zum Bestimmen, entsprechend der durch Probenentnahme erhaltenen Index-Blattknoten und der ersten Beziehungskorrespondenztabelle, einer Korrespondenz zwischen jeder in den durch Probenentnahme erhaltenen Index-Blattknoten umfassten Trajektorie und einem mit der Trajektorie assoziierten Index-Blattknoten, um eine zweite Beziehungskorrespondenztabelle zu bilden; und ausgelegt zum Bestimmen eines unverzerrten Schätzoperators entsprechend der Menge von Index-Blattknoten im Raumbereich, der Menge von durch Probenentnahme erhaltenen Index-Blattknoten und Daten in der zweiten Beziehungskorrespondenztabelle, und Bestimmen eines Abfrageergebnisses mittels Berechnung;
    wobei in einer räumlich-zeitlichen Datenbank mehrere Raum-Zeit-Punkte vorliegen und jeder Raum-Zeit-Punkt Zeit- und Rauminformation zu Zeit, Längengrad und Breitengrad aufweist, wobei jeder Raum-Zeit-Punkt weiter Identifizierungsinformation aufweist und Raum-Zeit-Punkte mit gleicher Identifizierungsinformation eine Trajektorie bilden;
    wobei der Prozessor im Einzelnen für Folgendes ausgelegt ist:

    Auflisten, entsprechend den durch Probenentnahme erhaltenen Index-Blattknoten, von mehreren in den Index-Blattknoten umfassten Trajektorien;
    Erhalten von mindestens einem mit jeder Trajektorie in den mehreren Trajektorien assoziierten Index-Blattknoten aus der ersten Beziehungskorrespondenztabelle; und Bestimmen, ob der mindestens eine erhaltene Index-Blattknoten unter den durch Probenentnahme erhaltenen Index-Blattknoten vorliegt, und, falls ein Bestimmungsergebnis lautet, dass der mindestens eine durch das Erhaltmodul erhaltene Index-Blattknoten unter den durch Probenentnahme von der Probenentnahmeeinheit erhaltenen Index-Blattknoten vorliegt, Reservieren eines Index-Blattknotens, der der Trajektorie entspricht, und Erfassen einer Korrespondenz zwischen dem Index-Blattknoten und der Trajektorie in der zweiten Beziehungskorrespondenztabelle.

10. Vorrichtung nach Anspruch 9, wobei der Prozessor im Einzelnen für Folgendes ausgelegt ist:

    Bestimmen aller Index-Blattknoten in der räumlich-zeitlichen Datenbank mittels des räumlich-zeitlichen Index;
    Bestimmen, basierend auf jeder Trajektorie in der räumlich-zeitlichen Datenbank, eines mit jeder Trajektorie assoziierten Index-Blattknotens; und
    Speichern der Korrespondenz zwischen jeder Trajektorie und ihrem assoziierten Index-Blattknoten, um die erste Beziehungskorrespondenztabelle zu bilden.

11. Vorrichtung nach Anspruch 9 oder 10, wobei
    der Prozessor im Einzelnen für Folgendes ausgelegt ist:
    Durchführen von zufälliger Probenentnahme mit Ersatz für n im angegebenen Raumbereich umfassten Index-Blattknoten, um B wiederholbare Index-Blattknoten zu erhalten, wobei n>B und sowohl n als auch B positive Ganzzahlen sind.

**12.** Vorrichtung nach einem der Ansprüche 9 bis 11, wobei der Prozessor im Einzelnen für Folgendes ausgelegt ist:

Bestimmen, ob eine wiederkehrende Trajektorie unter den mehreren aufgelisteten Trajektorien vorliegt, und, falls eine Trajektorie wiederkehrt, Auslassen der Auflistung der wiederkehrenden Trajektorie, um sicherzustellen, dass mehrere nicht wiederholte Trajektorien erhalten werden; und

Erhalten von mindestens einem mit jeder Trajektorie in den mehreren nicht wiederholten Trajektorien assoziierten Index-Blattknoten aus der ersten Beziehungskorrespondenztabelle.

**13.** Vorrichtung nach einem der Ansprüche 9 bis 12, wobei der Prozessor im Einzelnen für Folgendes ausgelegt ist:

Berechnen einer Menge von Index-Blattknoten, die jeder Trajektorie in der zweiten Beziehungskorrespondenztabelle entsprechen; und

Bestimmen des unverzerrten Schätzoperators entsprechend der Menge von Index-Blattknoten im Raumbereich, der Menge von durch Probenentnahme erhaltenen Index-Blattknoten, einer Menge von Trajektorien in der zweiten Beziehungskorrespondenztabelle und einer Menge von entsprechenden Index-Blattknoten, die jede Trajektorie durch den räumlich-zeitlichen Bereich leitet, sowie mit Bezug auf ein statistisches Wahrscheinlichkeitsverfahren und ein Gesetz der großen Zahlen, und Bestimmen des Abfrageergebnisses mittels Berechnung entsprechend dem unverzerrten Schätzoperator, wobei

das Bestimmen des unverzerrten Schätzoperators mit Bezug auf ein statistisches Wahrscheinlichkeitsverfahren und ein Gesetz der großen Zahlen im Einzelnen wie folgt erfolgt: Bestimmen eines reellen Wertausdrucks, der Informationen zu allen Blattknoten im angegebenen Bereich umfasst; anschließend Durchführen von Probenentnahmen für alle Blattknoten im angegebenen Bereich und Bestimmen des unverzerrten Schätzoperators unter Verwendung von Informationen zu den durch Probenentnahme erhaltenen Blattknoten und mit Bezug auf das Gesetz der großen Zahlen, um einen unter Verwendung des reellen Wertausdrucks erhaltenen reellen Wert zu schätzen.

## Revendications

**1.** Procédé de consultation de données de trajectoire dans une base de données espace-temps, procédé dans lequel sont établis un index espace-temps et un index inversé pour les données de trajectoire, l'index inversé étant utilisé pour former une première table de correspondances de relations qui comprend une correspondance entre chaque trajectoire et au moins un nœud terminal d'index associé à la trajectoire, les formes d'une association entre chaque trajectoire et son nœud terminal d'index associé comprenant : une partie médiane de la trajectoire traverse le nœud terminal d'index, le début ou la fin de la trajectoire se trouve dans le nœud terminal d'index et, la trajectoire se trouve intégralement dans le nœud terminal d'index, le procédé comprenant :

la réception d'une consultation de données de trajectoire en provenance d'un utilisateur, la consultation de données de trajectoire de l'utilisateur comprenant : la spécification, par l'utilisateur, d'une zone d'espace dans la base de données espace-temps pour compter les trajectoires dans la zone d'espace,

l'exécution d'un échantillonnage pour des nœuds terminaux d'index compris dans la zone d'espace spécifiée et la détermination d'une quantité de nœuds terminaux d'index dans la zone d'espace et d'une quantité de nœuds terminaux d'index obtenus par échantillonnage,

la détermination, en fonction des nœuds terminaux d'index obtenus par échantillonnage et de la première table de correspondances de relations, d'une correspondance entre chaque trajectoire comprise dans les nœuds terminaux d'index obtenus par échantillonnage et un nœud terminal d'index associé à la trajectoire, afin de former une seconde table de correspondances de relations, et

la détermination d'un opérateur d'estimation non biaisé en fonction de la quantité de nœuds terminaux d'index dans la zone d'espace, de la quantité de nœuds terminaux d'index obtenus par échantillonnage et des données dans la seconde table de correspondances de relations, ainsi que la détermination d'un résultat de consultation au moyen d'un calcul,

dans lequel de multiples points espace-temps existent dans la base de données espace-temps, chaque point espace-temps comportant des informations de temps et d'espace concernant le temps, la longitude et la latitude, chaque point espace-temps comportant en outre des informations d'identification, et les points espace-temps comportant les mêmes informations d'identification formant une trajectoire,

dans lequel la détermination, en fonction des noeuds terminaux d'index obtenus par échantillonnage et de la première table de correspondances de relations, d'une correspondance entre chaque trajectoire comprise dans les noeuds terminaux d'index obtenus par échantillonnage et un noeud terminal d'index associé à la trajectoire, dans le but de former une seconde table de correspondances de relations, comprend :

l'énumération de multiples trajectoires comprises dans les noeuds terminaux d'index, en fonction des noeuds terminaux d'index obtenus par échantillonnage,

la récupération, à partir de la première table de correspondances de relations, d'au moins un noeud terminal d'index associé à chaque trajectoire dans les multiples trajectoires, et

la détermination de ce que le ou les noeuds terminaux d'index se trouvent parmi les noeuds terminaux d'index obtenus par échantillonnage, et la réservation d'un noeud terminal d'index correspondant à la trajectoire, si le résultat de détermination est que le ou les noeuds terminaux d'index se trouvent parmi les noeuds terminaux d'index obtenus par échantillonnage, et l'enregistrement dans la seconde table de correspondances de relations d'une correspondance entre le noeud terminal d'index et la trajectoire.

2. Procédé selon la revendication 1, dans lequel la formation d'une première table de correspondances de relations qui comprend une correspondance entre chaque trajectoire et son noeud terminal d'index associé comprend :

la détermination de tous les noeuds terminaux d'index dans la base de données espace-temps au moyen de l'index espace-temps,

la détermination, sur la base de chaque trajectoire dans la base de données espace-temps, d'un noeud terminal d'index associé à chaque trajectoire, et

le stockage de la correspondance entre chaque trajectoire et son noeud terminal d'index associé afin de former la première table de correspondances de relations.

3. Procédé selon la revendication 1 ou la revendication 2, dans lequel :
l'exécution d'un échantillonnage pour un noeud terminal d'index compris dans la zone d'espace, dans laquelle sont déterminées une quantité de noeuds terminaux d'index dans la zone d'espace et une quantité de noeuds terminaux d'index obtenus par échantillonnage, représente en particulier :
l'exécution d'un échantillonnage aléatoire avec un remplacement pour n noeuds terminaux d'index compris dans la zone d'espace spécifiée dans le but d'obtenir B noeuds terminaux d'index répétitifs, où n > B et où n et B sont tous les deux des nombres entiers positifs.

4. Procédé selon l'une quelconque des revendications 1 à 3, dans lequel, après l'énumération de multiples trajectoires comprises dans les noeuds terminaux d'index, en fonction des noeuds terminaux d'index obtenus par échantillonnage, le procédé comprend en outre :

la détermination de ce qu'il existe une trajectoire récurrente parmi les multiples trajectoires qui sont énumérées, et si une trajectoire réapparaît, il y a saut de l'énumération de la trajectoire récurrente pour garantir que de multiples trajectoires non répétées sont obtenues, et

la récupération, à partir de la première table de correspondances de relations, d'au moins un noeud terminal d'index associé à chaque trajectoire dans les multiples trajectoires, est en particulier :

une récupération, à partir de la première table de correspondances de relations, d'au moins un noeud terminal d'index associé à chaque trajectoire dans les multiples trajectoires non répétées.

5. Procédé selon l'une quelconque des revendications 1 à 4, dans lequel la détermination d'un opérateur d'estimation non biaisé en fonction de la quantité de noeuds terminaux d'index dans la zone d'espace, de la quantité de noeuds terminaux d'index obtenus par échantillonnage et de données dans la seconde table de correspondances de relations, ainsi que la détermination d'un résultat de consultation au moyen d'un calcul, comprennent :

le calcul d'une quantité de noeuds terminaux d'index correspondant à chaque trajectoire dans la seconde table de correspondances de relations, et

la détermination de l'opérateur d'estimation non biaisé en fonction de la quantité de noeuds terminaux d'index dans la zone d'espace, de la quantité de noeuds terminaux d'index obtenus par échantillonnage, d'une quantité de trajectoires dans la seconde table de correspondances de relations et d'une quantité de noeuds terminaux d'index correspondants au travers desquels passe chaque trajectoire dans la zone espace-temps et en faisant référence à un procédé statistique de probabilité et à une loi des grands nombres, ainsi que la détermination du résultat de consultation au moyen d'un calcul en fonction de l'opérateur d'estimation non biaisé, où

la détermination de l'opérateur d'estimation non biaisé en faisant référence à un procédé statistique de probabilité et à une loi des grands nombres est en particulier :

la détermination d'une expression de valeur réelle qui comprend des informations sur la totalité des noeuds terminaux dans la zone spécifiée, et ensuite l'exécution d'un échantillonnage pour tous les noeuds terminaux dans la zone spécifiée, ainsi que la détermination de l'opérateur d'estimation non biaisé en utilisant les informations sur les noeuds terminaux obtenus par échantillonnage et en faisant référence à la loi des grands nombres, la détermination étant effectuée pour estimer une valeur réelle obtenue en utilisant l'expression de valeur réelle.

6. Procédé selon la revendication 5, dans lequel, lorsque la consultation des données de trajectoire demandée par l'utilisateur est une consultation de comptage de trajectoire, l'opérateur d'estimation non biaisé suivant est déterminé et le résultat de la consultation est déterminé au moyen du calcul suivant :

$$\widehat{N}_q = \frac{n}{B} \sum_{t=1}^{B} f_q(\widehat{R}_t^q)$$

dans lequel $f_q(\widehat{R}_t^q) = \sum_{r \in \widehat{R}_t^q \wedge q} \left\{ 1 \Big/ k_r^q \right\}$ , où q représente une zone espace-temps se rapportant à la plage de consultation de l'utilisateur ; n représente la quantité de tous les noeuds terminaux d'index dans la zone espace-temps q avant l'échantillonnage ; B représente la quantité de noeuds terminaux d'index après l'échantillonnage lorsque la consultation de données de trajectoire par l'utilisateur est une consultation de comptage de trajectoire ; r représente une trajectoire obtenue en fonction des B noeuds terminaux d'index et d'une seconde table de correspondances de relations obtenue après l'échantillonnage, et ; $k_r^q$ représente la quantité de noeuds terminaux d'index que traverse la trajectoire r dans la zone espace-temps q consultée.

7. Procédé selon la revendication 5, dans lequel, lorsque la consultation des données de trajectoire demandée par l'utilisateur est une consultation caractéristique de trajectoire, l'opérateur d'estimation non biaisé suivant est déterminé et le résultat de la consultation est déterminé au moyen du calcul suivant :

$$\hat{I}_q = \frac{n}{B} \sum_{t=1}^{B} h_q(\widehat{R}_t^q)$$

dans lequel $h_q(\widehat{R}_t^q) = \sum_{r \in \widehat{R}_t^q} l_r \Big/ k_r^q$ , où q représente une zone espace-temps se rapportant à la plage de consultation de l'utilisateur ; n représente la quantité de tous les noeuds terminaux d'index dans la zone espace-temps q avant l'échantillonnage ; B représente la quantité de noeuds terminaux d'index après l'échantillonnage ; r représente une trajectoire obtenue en fonction des B noeuds terminaux d'index et d'une seconde table de correspondances de relations obtenue après l'échantillonnage, $l_r$ représente une caractéristique de la trajectoire r, et ;

$k_r^q$ représente la quantité de noeuds terminaux d'index que traverse la trajectoire r dans la zone espace-temps q consultée

8. Procédé selon la revendication 5, dans lequel, lorsque la consultation des données de trajectoire demandée par l'utilisateur est une consultation pour une valeur caractéristique de trajectoire moyenne, l'opérateur d'estimation non biaisé suivant est déterminé et le résultat de la consultation est déterminé au moyen du calcul suivant :

$$\hat{L}_q = \frac{\sum_{t=1}^{B} h_q(\widehat{R}_t^q)}{\sum_{t=1}^{B} f_q(\widehat{R}_t^q)}$$

dans lequel $\widehat{N}_q = f_q\left(\widehat{R}_t^q\right) = \sum_{r \in \widehat{R}_t^q \wedge q} \left\{1 \middle/ k_r^q\right\}$ , $h_q\left(\widehat{R}_t^q\right) = \sum_{r \in \widehat{R}_t^q} l_r \middle/ k_r^q$ , où q représente une zone espace-temps se rapportant à la plage de consultation de l'utilisateur ; n représente la quantité de tous les noeuds terminaux d'index dans la zone espace-temps q avant l'échantillonnage ; B représente la quantité de noeuds terminaux d'index après l'échantillonnage ; r représente une trajectoire obtenue en fonction des B noeuds terminaux d'index et d'une seconde table de correspondances de relations obtenue après l'échantillonnage ; l représente une caractéristique de la trajectoire r et ; $k_r^q$ représente la quantité de noeuds terminaux d'index que traverse la trajectoire r dans la zone espace-temps q consultée.

**9.** Appareil de consultation de données de trajectoire dans une base de données espace-temps, appareil dans lequel sont établis un index espace-temps et un index inversé pour les données de trajectoire, l'index inversé étant utilisé pour former une première table de correspondances de relations qui comprend une correspondance entre chaque trajectoire et au moins un noeud terminal d'index associé à la trajectoire, les formes d'une association entre chaque trajectoire et son noeud terminal d'index associé comprenant : une partie médiane de la trajectoire traverse le noeud terminal d'index, le début ou la fin de la trajectoire se trouve dans le noeud terminal d'index et, la trajectoire se trouve intégralement dans le noeud terminal d'index,
l'appareil comprenant :

un récepteur configuré pour recevoir une consultation de données de trajectoire en provenance d'un utilisateur, la consultation de données de trajectoire de l'utilisateur comprenant : la spécification, par l'utilisateur, d'une zone d'espace dans la base de données espace-temps pour compter les trajectoires dans la zone d'espace, et un processeur configuré pour réaliser un échantillonnage pour des noeuds terminaux d'index compris dans la zone d'espace spécifiée dans lequel sont déterminées la quantité de noeuds terminaux d'index dans la zone d'espace et une quantité de noeuds terminaux d'index obtenus par échantillonnage, ainsi que pour déterminer, en fonction des noeuds terminaux d'index obtenus par échantillonnage et de la première table de correspondances de relations, une correspondance entre chaque trajectoire comprise dans les noeuds terminaux d'index obtenus par échantillonnage et un noeud terminal d'index associé à la trajectoire, afin de former une seconde table de correspondances de relations ; et configuré pour déterminer un opérateur d'estimation non biaisé en fonction de la quantité de noeuds terminaux d'index dans la zone d'espace, de la quantité de noeuds terminaux d'index obtenus par échantillonnage et des données dans la seconde table de correspondances de relations, tout comme pour déterminer un résultat de consultation au moyen d'un calcul,
dans lequel de multiples points espace-temps existent dans une base de données espace-temps, chaque point espace-temps comportant des informations de temps et d'espace concernant le temps, la longitude et la latitude, chaque point espace-temps comportant en outre des informations d'identification, et les points espace-temps comportant les mêmes informations d'identification formant une trajectoire,
dans lequel le processeur est en particulier configuré pour :

énumérer de multiples trajectoires comprises dans les noeuds terminaux d'index, en fonction des noeuds terminaux d'index obtenus par échantillonnage,
récupérer, à partir de la première table de correspondances de relations, au moins un noeud terminal d'index associé à chaque trajectoire dans les multiples trajectoires, et déterminer si le ou les noeuds terminaux d'index se trouvent parmi les noeuds terminaux d'index obtenus par échantillonnage, et réserver un noeud terminal d'index correspondant à la trajectoire, si le résultat de détermination est que le ou les noeuds terminaux d'index obtenus par le module de récupération se trouvent parmi les noeuds terminaux d'index obtenus par échantillonnage grâce à l'unité échantillonnage ; pour réserver un noeud terminal d'index correspondant à la trajectoire et enregistrer dans la seconde table de correspondances de relations une correspondance entre le noeud terminal d'index et la trajectoire.

**10.** Appareil selon la revendication 9, dans lequel le processeur est en particulier configuré pour :

déterminer tous les noeuds terminaux d'index dans la base de données espace-temps au moyen de l'index espace-temps,
déterminer, sur la base de chaque trajectoire dans la base de données espace-temps, un noeud terminal d'index associé à chaque trajectoire, et
mémoriser la correspondance entre chaque trajectoire et son noeud terminal d'index associé afin de former la première table de correspondances de relations.

**11.** Appareil selon la revendication 9 ou la revendication 10, dans lequel :

le processeur est en particulier configuré pour :

effectuer un échantillonnage aléatoire avec un emplacement pour n noeuds terminaux d'index compris dans la zone d'espace spécifiée, afin d'obtenir B noeuds terminaux d'index répétitifs, où n > B et où n et B sont tous les deux des nombres entiers positifs.

**12.** Appareil selon l'une quelconque des revendications 9 à 11, dans lequel :

le processeur est en particulier configuré pour :

déterminer s'il existe une trajectoire récurrente parmi les multiples trajectoires qui sont énumérées, et si une trajectoire réapparaît, pour sauter l'énumération de la trajectoire récurrente dans le but de garantir que de multiples trajectoires non répétées sont obtenues, et

récupérer, à partir de la première table de correspondances de relations, au moins un noeud terminal d'index associé à chaque trajectoire dans les multiples trajectoires non répétées.

**13.** Appareil selon l'une quelconque des revendications 9 à 12, dans lequel :

le processeur est en particulier configuré pour :

calculer la quantité de noeuds terminaux d'index correspondant à chaque trajectoire dans la seconde table de correspondances de relations, et

déterminer l'opérateur d'estimation non biaisé en fonction de la quantité de noeuds terminaux d'index dans la zone d'espace, de la quantité de noeuds terminaux d'index obtenus par échantillonnage, d'une quantité de trajectoires dans la seconde table de correspondances de relations et d'une quantité de noeuds terminaux d'index correspondants au travers desquels passe chaque trajectoire dans la zone espace-temps et en faisant référence à un procédé statistique de probabilité et à une loi des grands nombres ; et déterminer le résultat de consultation au moyen d'un calcul en fonction de l'opérateur d'estimation non biaisé, où

la détermination de l'opérateur d'estimation non biaisé en faisant référence à un procédé statistique de probabilité et à une loi des grands nombres est en particulier : la détermination d'une expression de valeur réelle qui comprend des informations sur la totalité des noeuds terminaux dans la zone spécifiée, et ensuite l'exécution d'un échantillonnage pour tous les noeuds terminaux dans la zone spécifiée, ainsi que la détermination de l'opérateur d'estimation non biaisé en utilisant les informations sur les noeuds terminaux obtenus par échantillonnage et en faisant référence à la loi des grands nombres, la détermination étant effectuée pour estimer une valeur réelle obtenue en utilisant l'expression de valeur réelle.

Spatial-temporal area

Index leaf node

Trajectory

r1  r2  r3

Longitude

Time    Latitude

FIG. 1

| Establish a spatial-temporal index and an inverted index for trajectory data in a spatial-temporal database, where the inverted index is used to form a first relationship correspondence table that includes a correspondence between each trajectory and its associated index leaf node | S11 |

| Receive a trajectory data query from a user, where the trajectory data query from the user includes: specifying, by the user, a space area in the spatial-temporal database, to count a result of data in the space area | S12 |

| Perform sampling for an index leaf node included in the specified space area, where a quantity of index leaf nodes in the space area and a quantity of index leaf nodes obtained by sampling are determined | S13 |

| Determine, according to the index leaf nodes obtained by sampling and the first relationship correspondence table, a correspondence between each trajectory included in the index leaf nodes obtained by sampling and an index leaf node associated with the trajectory, to form a second relationship correspondence table | S14 |

| Determine an unbiased estimation operator according to the quantity of index leaf nodes in the space area, the quantity of index leaf nodes obtained by sampling, and data in the second relationship correspondence table, and determine a query result by means of calculation | S15 |

FIG. 2

1000: Establish, in advance, a spatial-temporal index and an inverted index for a database that stores taxi trajectory data

↓

1001: Find, according to a received trajectory data query range, a spatial-temporal area q related to "Chaoyang District in Beijing in 2013" in the database that stores the taxi trajectory data

↓

1002: Calculate a quantity n of all index leaf nodes in the spatial-temporal area q

↓

1003: Perform random sampling with replacement for all index leaf nodes in the spatial-temporal area, to obtain a quantity B of after-sampling repeatable index leaf nodes, where n>B, and both n and B are positive integers

↓

1004: List, according to the index leaf nodes obtained by sampling, multiple trajectories included in each index leaf node

↓

1005: Determine whether a recurring trajectory exists among the multiple trajectories that are listed, and if a trajectory recurs, skip list the recurring trajectory, to obtain multiple non-repeated trajectories

↓

1006: Obtain, from the established first relationship correspondence table, an ID of at least one index leaf node associated with each trajectory in the multiple non-repeated trajectories

↓

1007: Compare the ID of the at least one index leaf node with IDs of the index leaf nodes obtained by sampling, and if the ID of the at least one index leaf node is the same as an ID of an index leaf node among the index leaf nodes obtained by sampling, reserve an index leaf node corresponding to the trajectory, and record, in a second relationship correspondence table, a correspondence between the index leaf node and the trajectory

↓

1008: Calculate a quantity of index leaf nodes corresponding to each trajectory in the second relationship correspondence table

↓

1009: Substitute the foregoing parameters into the foregoing formula (1) to obtain a calculation result, where the calculation result is a result of the query from a user

FIG. 3

FIG. 4

FIG. 5

FIG. 6

60

601

Processor

603

Memory

602

Receiver

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007096002 A

- US 2013339371 A

### Non-patent literature cited in the description

- Hierarchical Route Representation, Indexing, and Search. **QIONG ZHANG.** IEEE PERVASIVE COMPUTING. IEEE SERVICE CENTER, 01 April 2008, vol. 7, 78-84